(19) Europäisches Patentamt
European Patent Office
Office européen des brevets

(11) EP 1 071 259 A2

(12) EUROPEAN PATENT APPLICATION

(43) Date of publication:
**24.01.2001 Bulletin 2001/04**

(51) Int Cl.7: **H04L 29/06**

(21) Application number: **99402524.5**

(22) Date of filing: **14.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.07.1999 EP 99401813**

(71) Applicants:
- **TEXAS INSTRUMENTS INCORPORATED**
  **Dallas, Texas 75243 (US)**
  Designated Contracting States:
  **BE CH DE DK ES FI GB GR IE IT LI LU MC NL PT SE AT CY**
- **TEXAS INSTRUMENTS FRANCE**
  **06271 Villeneuve Loubet Cédex (FR)**
  Designated Contracting States:
  **FR**

(72) Inventors:
- **Thomas, David R.**
  **06650 Opio (FR)**
- **Panasik, Carl M.**
  **Garland, Texas 75044 (US)**

(74) Representative: **Potter, Julian Mark**
**D. Young & Co.,**
**21 New Fetter Lane**
**London EC4A 1DA (GB)**

# (54) Method and apparatus for scheduling network activity

(57) Disclosed is apparatus, and a method of operation therefor, operable to communicate with respective ones of a plurality of addressable entities within a computer network. The apparatus comprises communication means for communicating with at least one of said plurality of addressable entities, and means for automatically accessing a previously designated addressable entity within the network during an optimum time period for downloading computer implementable instructions and/or data corresponding to the entity. The apparatus further includes means for automatically storing the instructions and/or data locally to the computer system.

| DOMAIN | TIME DIFF. |
|---|---|
| • at | +1 |
| • com | -6 |
| • fi | +2 |
| • fr | +1 |
| • | |
| • | |
| • | |
| | |
| : | |
| • JP | +9 |
| : | |
| • UK | Ø |
| | |

Fig. 12

EP 1 071 259 A2

## Description

The present invention relates to computer systems. In particular, but not exclusively, to computer systems operable with the Internet.

To enhance their functionality and to share resources, for example printers, scanners, etc., individual computer systems are often linked together to form computer networks. Such networks may be limited to individual organisations, and even to discrete geographical locations for that organisation. For example, a particular building or even floor a within a building. However, some computer networks comprise computer systems which are geographically located a greater distance from each other, even in other countries, for example. Often, such large area networks are not limited to individual computer systems, but link computer networks, so that a large area network of computer networks is formed.

A particularly important example of such a network of networks is the Internet. The Internet comprises a network of computer systems and computer system networks spanning substantially the whole of the developed world. No one organisation owns or is responsible for the Internet as a whole. The computer systems and computer networks linked together by the Internet may be owned and operated by different organisations. Each computer system within the Internet has a unique address and can communicate with other computer systems within the Internet by using the other system's address. The format for communication between computer systems on the Internet is defined by the Internet Protocol (IP), in order to ensure that all the systems on the Internet can understand and communicate with each other. The telecommunication systems utilised by the Internet may comprise ISDN services, Plain Old Telephone Systems (POTS), mobile or wireless communication systems such as cellular or satellite radio telephone systems, cable communication or any other suitable telecommunications medium.

A particularly useful piece of software for computer networks is something known as the World Wide Web (WWW). The WWW is most often used with the Internet, which fully utilises its functionality, but the software may also be used with other networks.

The term WWW is also used to refer to the body of information embodied in different media such as text, audio or video, for example, and stored on computer systems within the computer network, for example computer systems forming part of the Internet. The information is divided up into suitable segments, typically relating to the nature of the information, for example, an image may be formed as a graphics file, and a document as a text file. Additionally, such information may also comprise so-called Web pages which are datafiles comprising information, which may comprise different media, and instructions on how to format that information when it is displayed on a computer screen. Within the WWW, not only do individual computer systems have addresses, but also individual pieces or groups of information. Thus, by setting the correct address, it is possible from one computer system to access not just another computer system but a particular piece of information stored on that computer system. In the following the term "entity" shall be used to refer to any addressable information within a network including individual computer systems, documents, websites and pages and parts thereof, text, audio and video files for example, unless the context dictates otherwise. In the terminology of the WWW, the address of an entity is known as a Uniform Resource Locator (URL).

The previously-mentioned entities are often accessed, (that is to say addressed and downloaded and the relevant computer program and/or data corresponding to the entity downloaded) by users of the WWW, and often comprise electronic versions of newspapers or journals, for example. Often, the computer system at which a particular entity resides is geographically distant from the computer system of a user who wishes to access that entity. Additionally, the telecommunications system over which such access must be made may be a particularly busy communication system. Furthermore, a large number of accesses to an entity may occur at around the same time and, therefore, the computer system at which that entity resides may be slow in dealing with each of the accesses and downloading the entity to the user's computer system. This is because the computer system or server multiplexes service for multiple users. The more users there are accessing entities stored on the server the greater the delay between multiplexed service. Consequently, it is often the case that accessing a desired entity and downloading it to the user's computer system is a lengthy process. Not only is the time delay irritating to a user, but it may be costly since the user is likely to be paying local telephone company charges for or during that access time. The entity is typically downloaded and cached on the user's computer system i.e. (stored in the user's computer system local memory, e.g. internal hard disk drive), in order to release the telecommunications link and the entity server, and allow the user to then review the entity stored on their own computer system, for example on the hard drive.

The delay and cost in accessing entities over the Internet is inhibiting the development and use of the Internet, in particular for commercial activities and by consumers.

A known system which seeks to address the aforementioned problems comprises a Web TV produced by NEC incorporating a NAVIO TV navigator produced by NAVIO Communications Inc. In this known system, a user's computer system hard disk is updated with Web pages (entities) defined by so-called bookmarks of the user at regular intervals. In this context "bookmarks" are a list of entity addresses stored in a user's computer system, and forming a part of a "drop-down" menu such that when the menu is activated the list of addresses is displayed and a user can "click" on an address to automatically access that entity.

The NAVIO system updates the hard disk drive at midnight each day. However, if entities do not have a low activity at night, for example they are located in countries in a different time zone where the time may be during the middle of the working day, the access time for the entities may be relatively long. Since the proposed system envisages accessing somewhere between 5,000 to 10,000 entities (web pages) each day, it is evident that significant time would be required and therefore costs incurred, for downloading the entities. Additionally, the proposed system assumes that bookmarks accurately represent the computer system user's current requirements and desires. However, it is common that a user does not delete bookmarks when they are no longer interested in the particular topic, but retains them until such time as the file comprising the bookmarks is of unreadable or unusable size and then removes unwanted bookmarks. Furthermore, the more successful or more common the system, the greater the problem regarding access times since one will have many systems within a particular time zone accessing or using the Internet at the same time. Moreover, many such systems may be seeking to access the same entities, thereby overloading those entities' server.

There are various factors which influence the speed and/or cost of downloading entities from server computer systems to client computer systems. For example, the amount of traffic being communicated over a network may be very high and result in reduced available bandwidth and consequent reduction in traffic throughput. Thus, downloading takes more time than if the communications network were less busy. The increased downloading time may result in increased toll charges for the network since such charges are typically length of call based.

Additionally, the time of day at which a download or access occurs may result in increased charges. Firstly, telecommunications networks generally vary toll charges throughout the day, and secondly network traffic is typically concentrated into certain times of the day, usually local office hours. High toll charges typically coincide with periods of high traffic, and thus a user suffers from both slow download combined with high toll charges. Furthermore, there are often higher levels of access to particular entities at certain times of day than at other times of day. Thus, the response time from a server for that entity increases during times of day when there are high levels of access. The server response time may thus also contribute to slow download and possibly increased toll charges.

Embodiments in accordance with the present invention seek to ameliorate and address at least some of the aforementioned drawbacks and problems.

Particular and preferred aspects of the invention are set out in the accompanying independent claims. Combinations of features from the dependent and/or independent claims may be combined as appropriate and not merely as explicitly set out in the claims.

In accordance with a first aspect of the invention, there is provided a method for operating a computer system in a computer network, the method comprising: automatically accessing an addressable entity within the network during an optimum time period for accessing information corresponding to the entity; and

storing the information locally to the computer system. The information typically comprises computer usable information such as computer-implementable instructions and/or data, particularly in electronic form.

Typically, the addressable entity will have been previously designated or identified as one which it is desirable to download at various intervals.

In a preferred embodiment the entity is automatically accessed during a predetermined time period.

Preferably, the addressable entity is automatically accessed during a time period generally outside of normal office hours, preferably between 17:00 and 08:00 on a following day. More preferably, between midnight and 06:00.

Suitably, the time period is for the computer system local time.

Optionally, the addressable entity is automatically accessed at a time of day corresponding to a local time for which reduced or low rate telecommunications tolls are available, and the apparatus includes a data structure comprising one or more entries including a toll charge and corresponding time period which is interrogated to determine toll charge for a particular period.

Optionally, the time period is local time for the entity.

Preferably, a top level domain is determined for the addressable entity; and the local time for the entity is derived from a knowledge of the top level domain. Particularly, the top level domain may be compared with a data structure comprising at least one entry having a top level domain designation and an associated local time for the top level domain.

Suitably, the data structure comprises a table including respective entries comprising a top level domain designation and an associated local time.

In a second aspect, the method further comprises determining access speed for the addressable entity for a time period corresponding to initiation of an access to the entity and establishing the time period as the predetermined time period for the access speed exceeding a threshold value. Thus, the time period during which automatic access to or auto-caching of the addressable entity occurs is dependent on the access speed from the server to the storage area local to a user's computer system. This optimum time period for automatic access may be determined without knowledge of the location of server on which the addressable entity resides or is stored. This is particularly useful for entities which reside on a servers within sub-networks, such as a corporation's intra-net, where it may not be possible to identify the geographic location of an entity's server since entry to the intra-net is via an "entity" server or "firewall" and the desired entity resides on another server located in a different place or country from the firewall.

Preferably, the method further comprises determining access speed for the addressable entity during another time period corresponding to initiation of an access to the entity for the access speed for the previous time period failing to exceed the threshold value. Thus, apparatus operating in accordance with this aspect of the invention searches for an optimum time for automatic entity access.

In a particular embodiment of this aspect of the invention, the method further comprises determining access speed for the addressable entity during the another time period in response to the access speed for the predetermined time period failing to exceed the threshold for a predetermined number of consecutive accesses to the addressable entity for the time period. Such an embodiment provides a form of "damping" to the search for an optimum time for automatic entity access, and avoids initiating a search for a better time for momentary lapses in access speed. A consistent lapse over a number of accesses have to fall below the threshold before determining the access speed for another time period.

In a third aspect of the invention, the method further comprises the steps:

(a) initiating access to an addressable entity within the network during a first time period;
(b) determining access speed for accessing the addressable entity initiated during the first time period;
(c) initiating access to the addressable entity during a next time period;
(d) determining access speed for accessing the addressable entity initiated during the next time period;
(e) comparing respective access speeds for access to the addressable entity initiated during first and next time periods to determine the time period corresponding to greatest access speed; and
(f) setting the predetermined time period to the time period corresponding to greatest access speed. Suitably, step (a) comprises initialising the predetermined time period as the first time period.

In a preferred embodiment of this aspect, steps (c) to (f) are repeated responsive to a first criterion being satisfied. For example, the criterion may be that a certain consecutive number of iterations of steps (c) to (f) have to be executed. Optionally, the first criterion may be the access speed being below a threshold value. Thus, by having the first criterion control of the number of iterations of steps (c) to (f) once a search has been initiated may be achieved.

In a yet further preferred embodiment initiation of steps (a) to (f) is responsive to a second criterion being satisfied. For example, the second criterion can be a predetermined time interval having elapsed since previously initiating steps (a) to (f), or the access speed for accessing during the predetermined time period failing to exceed a threshold value.

A computer system operating in accordance with the foregoing second and third aspects may search for an access time providing greatest access speed. Preferably, initiation of steps (a) to (f) of the foregoing method is responsive to a predetermined criterion being satisfied. Such a criterion may be a predetermined time interval having elapsed since a previous initiation of steps (a) to (f). Optionally, the predetermined criterion may be the access speed for later accesses of the predetermined time period failing to exceed a threshold value.

Thus, a computer system operated in accordance with the first and second aspects will continue searching for better time periods in order to find an optimum time for predetermined time periods.

It will be evident that the steps in the foregoing method of the third aspect need not be performed in the sequence outlined above, but may be performed in any other suitable sequence.

In accordance with a fourth aspect of the invention, there is provided apparatus operable to communicate with one or more addressable entities within a computer network, comprising:

communication means for communicating with one or more of the addressable entities;
means for automatically accessing one or more entities within the network during an optimum time period for accessing information corresponding to the entity; and
means for locally storing the information .

In a preferred embodiment, the apparatus further comprises means for determining access speed for said addressable entity during a time period and establishing said time period as said predetermined time period for said access speed exceeding a threshold value, and preferably comprises means for determining access speed for said addressable entity during another time period for said access speed corresponding to said time period failing to exceed said threshold value.

In a further preferred embodiment, the apparatus comprises means operable to perform the following steps:

(a) accessing an addressable entity within said network during a first time period;
(b) determining speed for accessing said addressable entity during said first time period;
(c) accessing said addressable entity during a next time period;
(d) determining speed for accessing said addressable entity during said next time period;

(e) comparing respective access speeds for accessing said addressable entity during first and next time periods to determine the time period corresponding to greatest access speed; and

(f) setting said predetermined time period to said time period corresponding to greatest access speed.

In accordance with a further aspect of the invention, there is provided a method for operating a portable wireless computer system in a computer network including a rechargeable battery pack, the method comprising: automatically accessing an addressable entity within said network during charging of said battery pack for said computer system for downloading computer information corresponding to said entity; and storing said computer information locally to said computer system.

In accordance with a yet further aspect of the invention there is provided, a method for operating a wireless communications system comprising a base station having an area of wireless communications influence, the method comprising: accessing an addressable entity within a computer network; storing computer information corresponding to said addressable entity locally to said base station; and providing access to said computer information to wireless communications terminals within said area of influence.

In a preferred embodiment the apparatus comprises a computer system.

Aspects of the invention advantageously provide for optimised automatic caching of an entity in terms of cost and/or speed by selecting an appropriate time period in which to conduct the automatic caching. By auto-caching the information corresponding to the addressable entity locally to the computer system e.g. in non-volatile memory storage associated with the computer system or even on a server relatively local to the computer system, a user can access the information corresponding to the addressable entity very quickly compared with obtaining it over the computer network.

In a particular embodiment of the invention there is provided a portable wireless terminal operable in a computer network, comprising:

computing means;

user interface means including a key pad and a display;

a rechargeable battery pack;

sensing means for sensing charging of the battery pack; and

means for automatically accessing an addressable entity within the network for accessing computer information corresponding to the entity responsive to sensing charging of the battery pack; and

means for automatically storing the information locally to the terminal.

In another embodiment there is provided, a wireless communications system, comprising: a base station defining an area of communications influence for wireless terminals; and a computer system associated with said base station and operable to cache computer information corresponding to an addressable entity within a computer network; said base station and said computer system operable to provide access to said computer information cached on said computer system to wireless terminals within said area of wireless communications influence.

Typically, the portable wireless terminal includes a radio telephone or Personal Digital Assistant.

Embodiments of the invention also include a computer program comprising machine implementable instructions for implementing the invention, and a carrier medium comprising a computer program for implementing the invention.

Suitably, the carrier medium comprises memory means including a magnetic disk memory, an optical disk memory, a semiconductor memory, a radio frequency carrier wave or optical carrier wave.

The term "accessing speed" used herein includes the addressing and/or transfer phase of computer usable information such as program instructions and/or data corresponding to an addressable entity from the relevant server to the computer system. In preferred embodiments of the invention, it is the download speed for the computer information which id determined.

Specific embodiments in accordance with the present invention will now be described, by way of example only, and with reference to the drawings, in which:

Figure 1 is a schematic illustration of a computer network comprising a server and client computer system;

Figure 2 is a block diagram illustrating the components of a computer system of Figure 1;

Figure 3 is a schematic illustration of a weighted stack in accordance with an embodiment of the invention;

Figure 4 is a schematic illustration of the weighted stack of Figure 3 after updating;

Figure 5 is a schematic illustration of a data entry format of a weighted stack in accordance with an embodiment of the invention;

Figure 6 is a schematic illustration of another data entry format for a weighted stack in accordance with an embodiment of the invention;

Figure 7 illustrates a flowchart for a client module in accordance with an embodiment of the invention for creating an ordered stack of addresses;

Figure 8 illustrates a flowchart for a client module operable for auto-caching computer network entities;

Figure 9 is a schematic illustration of a yet another data entry format in accordance with an embodiment of the invention;

Figure 10 illustrates a flowchart for a client module operable to set an auto-cache interval in accordance with an embodiment of the invention;

Figure 11 illustrates a flowchart for a client module operable to conduct auto-caching at a pre-determined time in accordance with a first aspect of the invention;

Figure 12 illustrates a table for an embodiment in accordance with the first aspect of the invention;

Figure 13 illustrates a flowchart in accordance with a second aspect of the invention;

Figure 14 illustrates a flowchart in accordance with a third aspect of the invention; and

Figure 15 illustrates a table for storing a concordance of entities and optimum time periods.

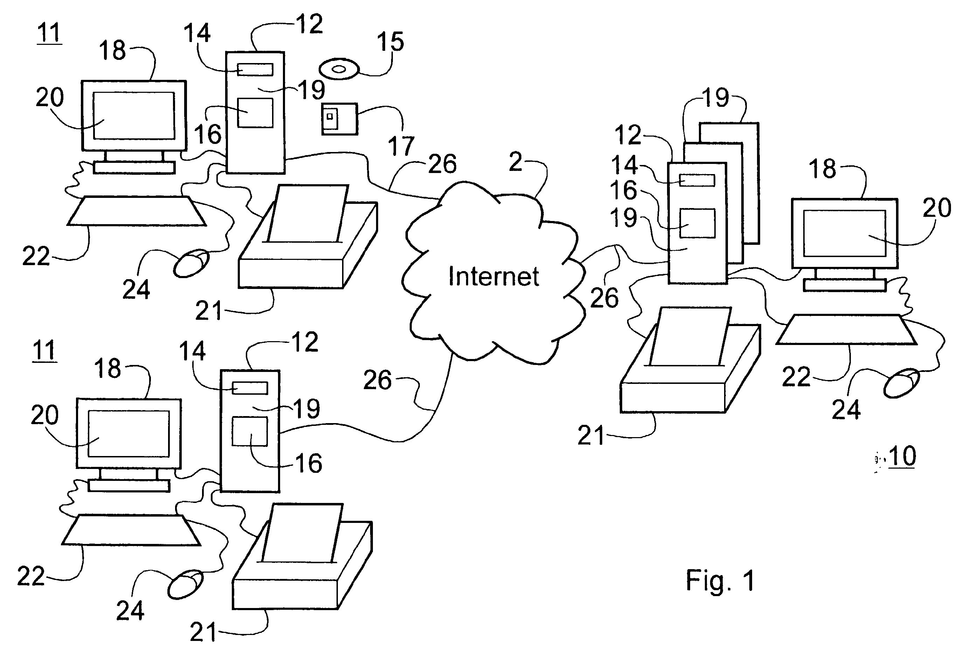

Referring now to Figure 1, there is illustrated a schematic representation of a network of computer systems, such as the Internet, comprising a server computer system 10 and client computer systems 11. Both the server computer system 10 and the client computer system 11 comprise similar components, for example a system unit 12, a display device 18 with a display screen 20, and user input devices, including a keyboard 22 and a mouse 24. A printer 21 is also connected to the system. Each system unit 12 comprises media drives, including an optical disk drive 14, a floppy disk drive 16 and an internal hard disk drive not explicitly shown in Figure 1. A CD-ROM 15 and a floppy disk 17 are also illustrated. Additionally, server computer system 10 comprises high capacity storage media, such as further magnetic hard disk 19, for example.

A program, comprising a sequence of computer-implementable instructions and data, for implementing various functions or conveying various information may be supplied on media such as one or more CD-ROMs and/or floppy disk, then stored on a hard disk, for example. The computer system shown in Figure 1 is also connected 26 to a network 2, which in the illustrated embodiment is the Internet, but may be a local or wide area dedicated or private network, for example. A program or data implementable on a computer system may also be supplied on a telecommunications medium, for example over a telecommunications line via a network and/or the Internet. For a client computer system 11 operating as a mobile terminal over a radio telephone network, the telecommunications medium may be a radio frequency carrier wave carrying suitably encoded signals representing the computer program and data or information. Optionally, the carrier wave may be an optical carrier wave for an optical fibre link or any other suitable carrier medium, for a landline linked telecommunications system. A mains electrical wiring system may also be utilised, for example, for caching information to a portable electronic device, such as a personal Digital Assistant (PDA), when it is coupled to the mains for recharging its batteries.

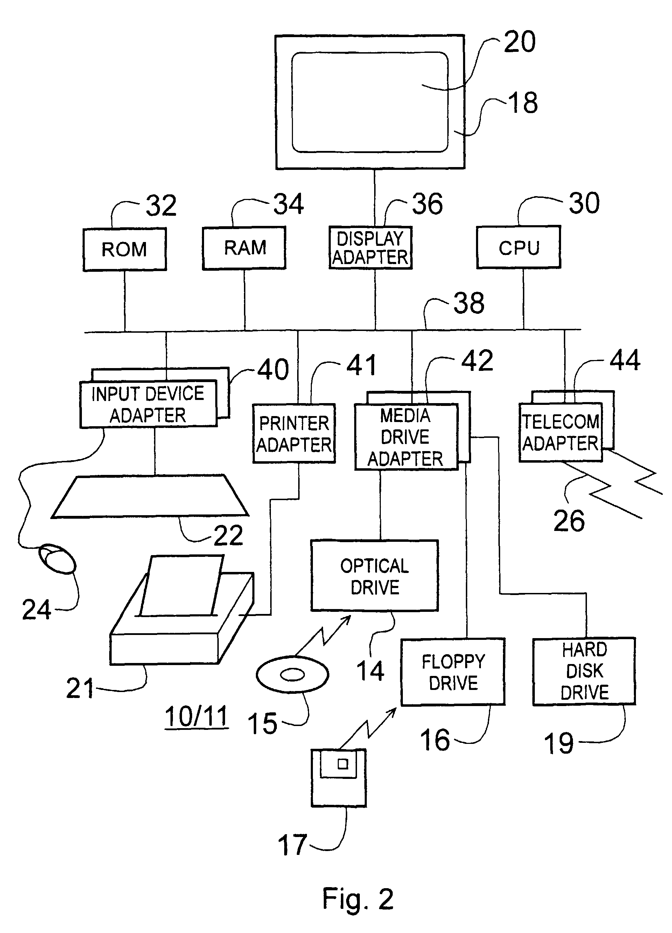

Referring now to Figure 2, there is shown a schematic and simplified representation of an exemplary implementation of a computer system such as that referred to with reference to Figure 1. As shown in Figure 2, a processor (CPU) 30 is coupled to a bus structure 38. Also connected to the bus structure 38 are read only memory 32 and random access memory 34. A display adapter 36 connects a display device 18 to the bus structure 38. One or more user-input device adapters 40 connect the user-input devices, including the keyboard 22 and mouse 24 to the bus structure 38. An adapter 41 for the connection of the printer 21 may also be provided. One or more media drive adapters 42 can be provided for connecting the media drives, for example the optical disk drive 14, the floppy disk drive 16 and hard disk drive 19, to the bus structure 38. One or more telecommunications adapters 44 can be provided thereby providing means for connecting the computer system to one or more networks. The communications adapters 44 could include a local area network adapter, a modem and/or ISDN terminal adapter, etc. as required.

It will be appreciated that Figures 1 and 2 are schematic representations of one possible implementation of a computer system, suitable for either a server computer system 10 or a client computer system 11. It will be appreciated from the following description of embodiments of the present invention that the computer system in which the invention could be implemented may take many forms. For example, rather than the server computer system 10 comprising a display device 18 and printer 21, it may be merely necessary for the server computer system 10 to comprise a processing unit, and be accessible by client computer systems 11. The client computer may also be a non-PC type of computer which is Internet or network compatible, for example a Web TV, or set-top box for a domestic TV capable of providing access to a computer network such as the Internet. Further applications for the client computer may be as an "electronic book" or "newspaper", having suitably daily or weekly updates. Optionally, the client computer may be in the form of a wireless PDA or a multi-media terminal.

Each computer system 10, 11 has a unique address within the Internet, and in the terminology of the WWW these addresses are known as Uniform Resource Locators (URLs). Additionally, each entity within the WWW may also have a unique address or URL. An entity may comprise many different types of information, for example text, graphics, audio, video, etc., and is therefore referred to as an hypermedia document or entity. Files comprising a single medium such as a graphics file, audio file, video file, etc. may also be found on the WWW and are individually addressable. Within the WWW, hypermedia entities are created and handled using a programming language called Hypertext Markup Language (HTML). HTML provides a method of formatting entities in which the information may be separated from the presentation of the entity. That is to say entities containing the same information may be presented in different ways.

WWW software is based on a client-server architecture. A Web client, for example a browser, is a computer program which can send requests for information, such as documents, to a Web server. A Web server is a program which, in response to a request from a client, sends documents ( entities), or error messages if appropriate, requested back to the requesting client. The Web server resides on server computer system 10. The entity received by the client is stored on the client computer system 11, typically on the hard disk drive 19 in a process known as "caching".

The client program typically resides in the hard disk drive 19 of the client computer system 11, and is operable to configure client computer system 11 to interface with the Internet and WWW.

In a first embodiment in accordance with the invention, the client comprises a software module comprising computer implementable instructions for determining a user access profile to WWW pages or sites. The module utilises the user profile to automatically pre-cache entities accessed by the user in accordance with the determined user access profile. Pre-cashing occurs at a suitable time as may be determined by the user, or automatically in accordance with the user access profile.

The user profile is determined by monitoring access to entities initiated by the client. The first time a URL is accessed by the client, the address is stored together with a count value which is initialised to 1. Each time that address is accessed by the client, the count value is increased by 1. Those entities having an access profile value greater than a threshold value, for example, are pre-cached by the client and stored on the client computer system hard disk drive 19 ready for almost instant access the next time the user enters one of the addresses corresponding to the pre-cached entities. The threshold value may optionally comprise the number of sites to be pre-cached, such that only the top twenty most accessed sites, for example, are pre-cached.

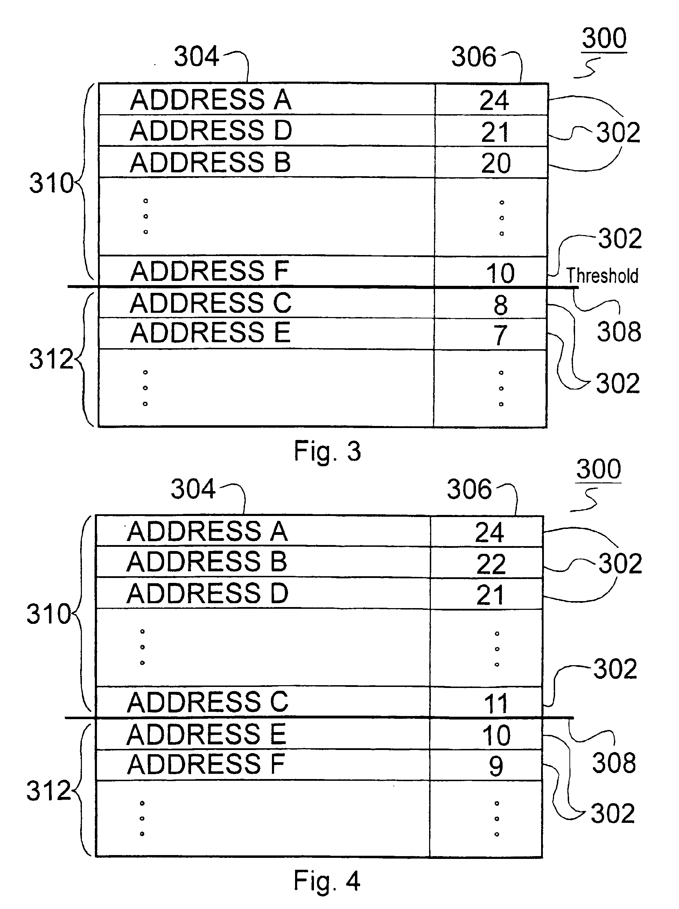

The entity addresses may be stored in a weighted stack 300 as shown in Figure 3. Each data entry 302 of weighted stack 300 comprises two parts. A first part 304 for storing an entity address, and a second part 306 for storing the current user access profile value. The stack is ordered in accordance with the access profile value 306, with the higher access profile values being stored at the top of the stack. Within the weighted stack 300, there is a threshold 308. Addresses stored above this threshold 310 will be pre-cached, and addressed stored below the threshold 312 will not be pre-cached.

Referring now to Figure 4, there is illustrated an example of the weighted stack 300 after an update subsequent to client access to entities. In the particular example illustrated in Figure 4, the client has accessed ADDRESS B twice since the situation reflected in Figure 3. Consequently, ADDRESS B has now moved up a place in weighted stack 300, and ADDRESS D has been moved down a place since no further accesses have been made to it and its access count remains at 21. Additionally, ADDRESS C has been accessed three times since the time represented by the weighted stack illustrated in Figure 3, such that its access profile value is now 11. Not only has ADDRESS F not been accessed since the period reflected by the weighted stack illustrated in Figure 3, but has also not been accessed for a auto-set period resulting in its access profile value being reduced by 1 to 9. Furthermore, ADDRESS E has been accessed three times, thereby resulting in an access profile value of 10. Consequently, ADDRESS F has fallen to two places below threshold 308 in weighted stack 300. Meanwhile ADDRESS C is now just above threshold 308, whilst ADDRESS E is just below the threshold 308. Thus, a user access profile is built up and recorded in the weighted stack 300 in accordance with the number of accesses made to entity addresses.

The auto-set period after which no access has been made to a particular address such that the relevant access profile value is decreased may be any suitable period as determined by the user, for example one week, four weeks, six weeks, etc. Optionally, another criterion may be used for determining decreasing the access profile value which may be based on historical access trends, such that a value is given by Y*cache_access_frequency, where Y is a suitable number representing a time period or interval, for example a day, a week etc. If the value falls below a threshold value the relevant access profile value is decreased. The cache_access_frequency is measured in the same time intervals.

The threshold 308 may be based on the number of sites which are to be auto-cached, such that a certain number of storage locations are available above the threshold, for example 20. Optionally, threshold 308 may be based on a minimum number of accesses to an address, for example 20, as recorded by the access profile value. Addresses having an access profile value exceeding the threshold 308 will be auto-cached, whilst addresses not exceeding the threshold will not be auto-cached.

Preferably, if an entity is accessed at an address which is an extension of an entity address that has already been weighted within the stack, then the pre-existing upper level address has its access profile value updated.

Entities that are accessed often by a user will typically be periodically updated. Such updates may be weekly or some other suitable period such as fortnightly or monthly.

Although entities updated at relatively long periods such as weekly, fortnightly etc. are not accessed frequently by a user, they are nevertheless accessed regularly and a user would wish to have prompt access to them without delay. Thus, it is desirable that such sites are auto-cached. A problem exists, however, in that because of their relatively infrequent access to such sites, the address of such sites is likely to fall well below the threshold 308 of a weighted stack 300 as illustrated in Figures 3 and 4.

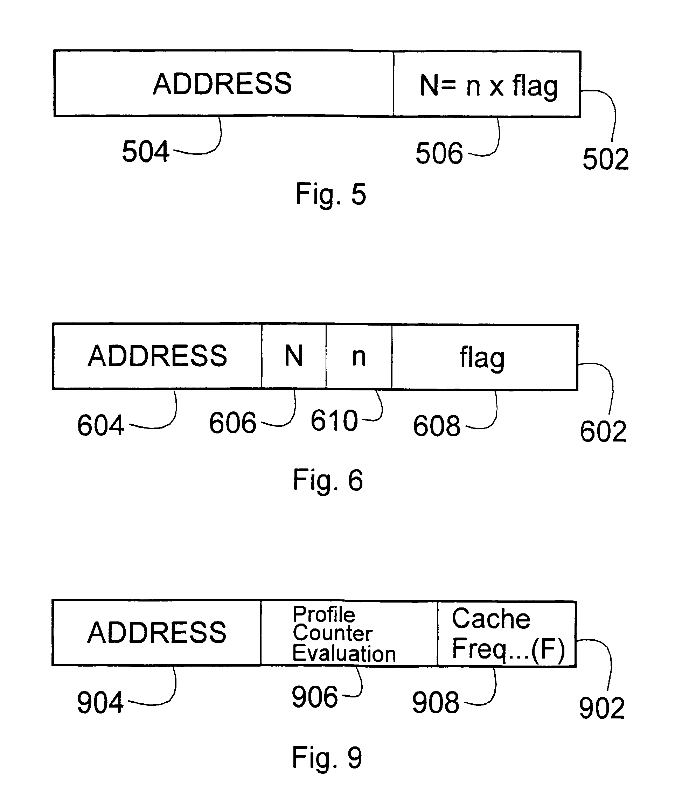

In order to address this problem, a second embodiment in accordance with the invention provides for a user-definable or automatically derivable flag to be included in a data entry for the stack 300. An example of a suitable data entry format 502 is illustrated in Figure 5. The data entry 502 comprises an address 504, and an access profile value storage area 506. The access profile value N is derived from the following relationship:

$$N = n \times \text{flag},$$

where n is the number of actual accesses to the address stored in 504 and flag is a user-definable value, or automatically derived value, depending upon the typical periodicity of access to the address stored in location 504. For example, the flag may be automatically derived from the time interval since the last update of data for the entity. Such information may be obtained from "page info" entries for a webpage for example.

A user may define the flag to be equal to 1 for an address which is typically accessed once a day, whilst a flag may be set to 7 for weekly access or 31 for monthly access. In this manner, sites which are regularly accessed, but at relatively lengthy intervals, may still appear above threshold value 308 and be auto-cached.

Optionally, in accordance with a third embodiment of the invention, the data entry of a weighted stack may be formatted such that a flag defines a class of address having a respective threshold value for access before the access value profile can be updated. An example of a data entry format 602 in accordance with the third embodiment is illustrated in Figure 6. Data entry 602 comprises an address storage location 604 and an access profile value N storage location 606. A user-definable or automatically-definable flag is stored in location 608, and defines the class of the corresponding address stored in location 604.

Data entry format 602 also comprises a storage area 610 for storing an access counter, n, which is incremented by 1 each time the address stored in location 604 is accessed. The flag stored in 608 defines a threshold for access counter n. Each time that threshold value is achieved profile counter N is updated by 1, and access counter n is reset to zero. For example, a flag corresponding to an address which is likely to be accessed daily may define a threshold value of 20, one that is updated weekly a threshold value of 5 and one that is updated monthly a threshold value of 1.

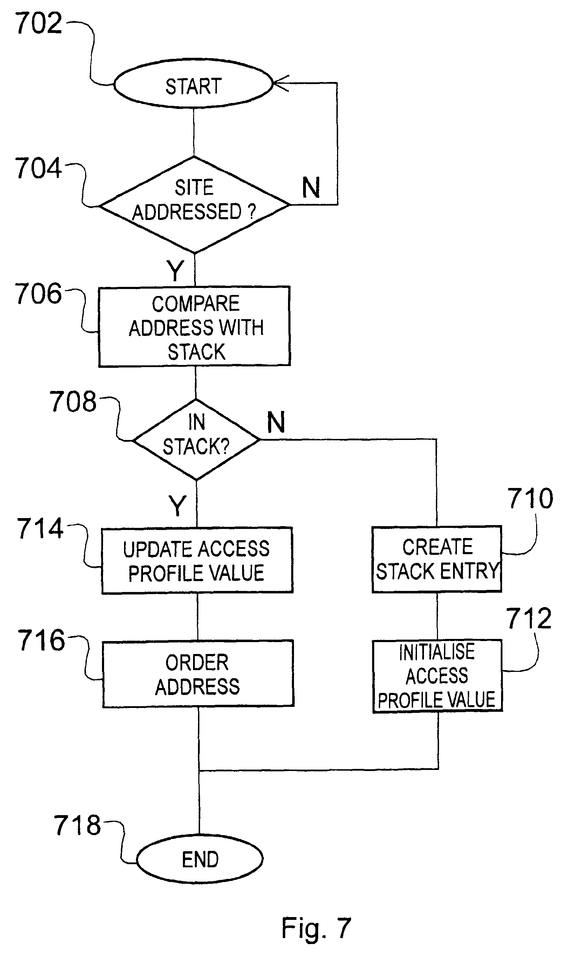

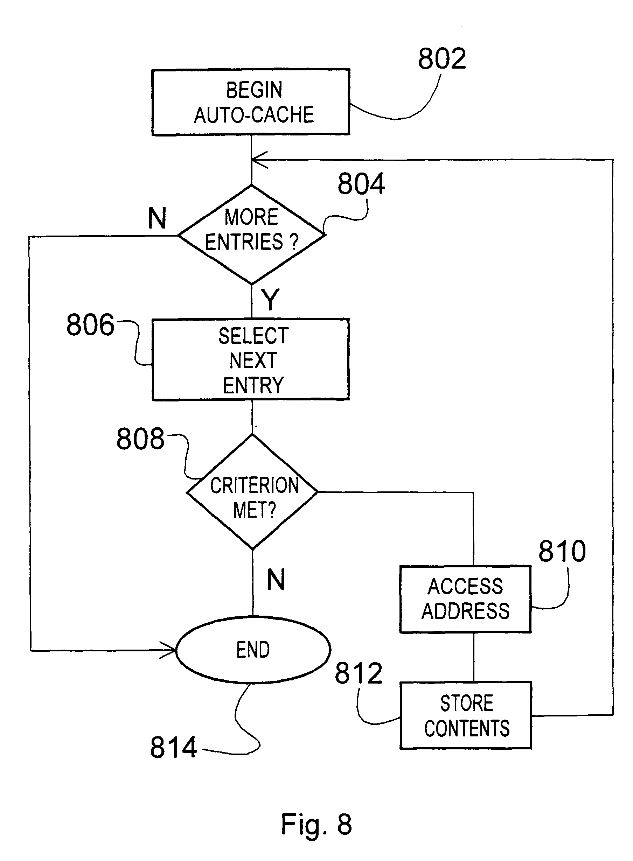

The operation of a suitable client module for monitoring and sorting entity addresses into an ordered sequence for determining which should be auto-cached and which should not, and for performing auto-caching, will now be described with reference to the flowcharts illustrated in Figure 7 and Figure 8.

The operation of a computer system in accordance with the flowchart of Figure 7 starts at step 702 and proceeds to step 704 where it is determined whether or not an Internet site has been addressed. If no, then the process flows back to the start at step 702. If yes then process control flows to step 706 where the address is compared with addresses waiting in stack 300, and at step 708 it is determined whether or not an entry exists in stack 300 for that address.

If no entry exists in the stack 300 then the process control flows to step 710 where the appropriate stack entry is created, and at step 712 the access profile value for the new stack is initialised.

If an entry were to exist for that address then the process control flows to step 714 where the access profile value is updated for that address. Next, step 716, the address is ordered within the stack, and then the process ends at step 718.

Turning now to Figure 8 there is illustrated a flow chart for the process of auto-caching contents of entities in accordance with a user access profile. Preferably the client module comprises software capable of configuring the client computer system to operate in accordance with the flowchart of Figure 8.

The computer system is configurable such that at a suitable time determined by the user or automatically in accordance with the user access profile, auto-caching is initiated, step 802. Next, step 804, the stack 300 is interrogated to determine whether or not there are more entries left for auto-caching. If the result of step 804 is no then process control flows to step 814 and the software module ceases operation. However, if the result of step 804 is yes, then process control flows to step 806 where the next entry in stack 806 is selected. At step 808, the entry is inspected to determine whether or not it meets the criterion, that is to say exceeds the threshold 308 or not. If not then process control flows to step 8418 where it stops. If the criterion is met then process control flows to step 810 where the entity address corresponding to the stack entry is accessed, and at step 812 the contents are stored locally to the computer system for example, on the local hard disk drive. Process control then flows to step 804. The process ends at step 814.

In a preferred embodiment of the invention, the default option for auto-caching entity addresses is daily. However, as discussed above, some sites are periodical entities, for example weekly or monthly journals and consequently are often updated once a week or once a month. Such updating typically occurring on the same day of each week or month. Thus, it would be preferable not to auto-cache such sites on a daily basis, or a basis more often than the sites are updated.

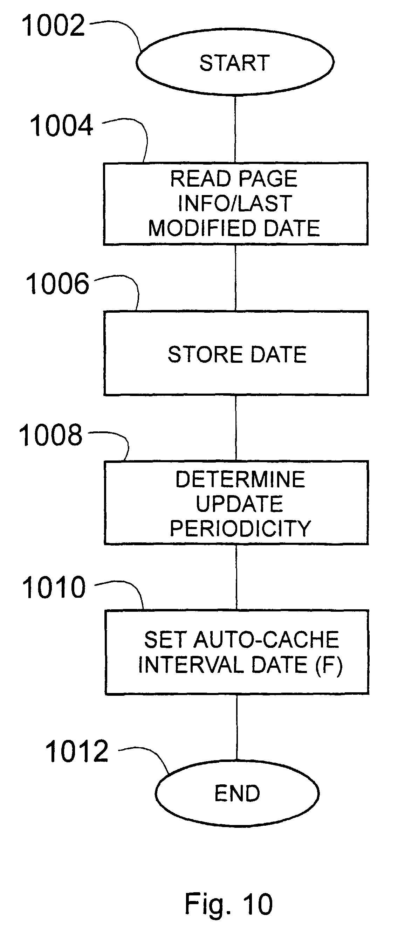

Associated with a web page, are details termed "page info" in which is included the last date/time on which the page was modified or updated. Additionally, each sub-file comprising a web page has an associated "last modified date" statement. The "page info" or "last modified date" statement may be utilised by a client module in accordance with a second aspect of the invention to identify the date/time on which the page or site was last updated. The client module may be configured to access the page info or last modified date statement in order to log it each time the address is accessed, and to determine the frequency at which modification or update of the entity/page occurs. The update or modification frequency can then be utilised to create an auto-cache frequency which may be included in a data entry such as one formatted as illustrated in Figure 9. The data entry format 902 comprises an address storage location 904, a profile counter evaluation storage location 906, which comprises the profile counter N, or any flags or access counters n in accordance with the second and third embodiments of the invention. Additionally, data entry format 902 comprises an auto-cache frequency storage location 908, in which the auto-cache frequency F is stored. The auto-cache frequency F will typically comprise the date and/or time for the next auto-caching of the corresponding address stored in location 904.

Typically, the frequency F will be determined to be the next day, or an hour or so later than the determined regular update derived from the page info or last modified date statement included in the entity/page. Optionally, a more suitable time for auto-caching the site/page may be defined.

The operation of a client module in accordance with a preferred embodiment of the invention for deriving an auto-cache frequency value F for an address will now be described with reference to the flowchart illustrated in Figure 10.

The process for determining an auto-cache frequency value F begins at step 1002 of the flowchart illustrated at Figure 10.

The process starts at step 1002 when an entity (webpage for example) has been accessed by the client computer system. At step 1004 the page information, or last modified date of the webpage is read, and the last modified date stored at step 1006. Next, step 1008, the periodicity of the updates for the entity is determined, by analysing the most recent updated date, and a set of historic updated dates.

The update periodicity may be calculated by determining the number of days since the entity was last modified and storing that number of days for a current access to the entity. Then the number of days obtained for the current update is subtracted from the number of days since last modification stored for a previous access. If the result is less than 1, then the periodicity is set to the most recently stored number of days since the last modification.

Next, step 1010, the auto-cache interval or date defining the auto-cache frequency value F is set, and the process ends at step 1012. Thus, it is possible to determine at what intervals auto-caching should be carried out, and also if there is sufficient information regarding the last modification, the time of day by which the auto-caching should be carried out in order to ensure the most up-to-date information has been cached.

In an embodiment in accordance with a first aspect of the invention, a client software module initiates automatic access for each ADDRESS above threshold 308 at a time of day when it is reasonable to expect network traffic to be low. Such a time of day is outside normal office hours of 09:00 to 17:00 for example, and more preferably at night such as between midnight and 06:00.

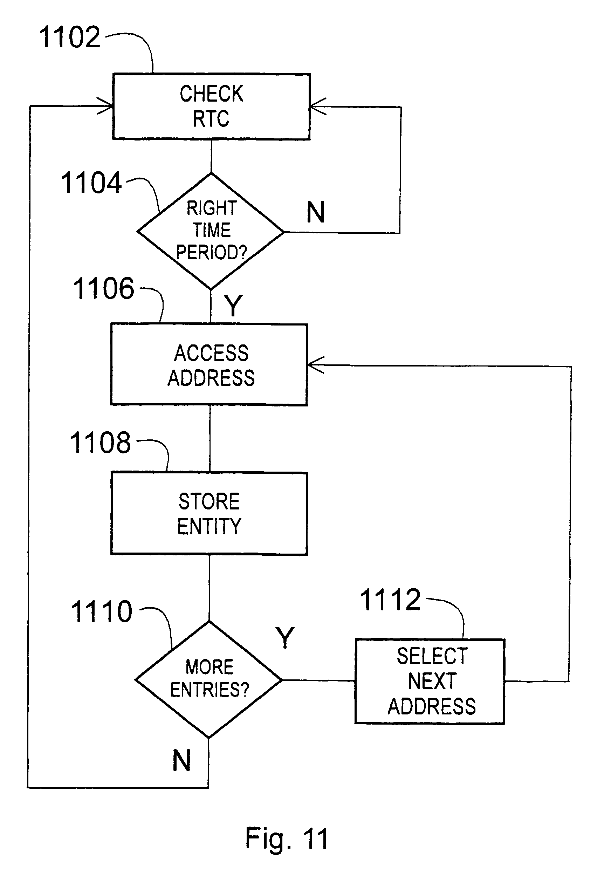

The real time clock provided with a computer system can be used by the client software module to initiate automatic caching of entities at particular times of day. A flow chart illustrating the steps performed by a client computer system in accordance with this embodiment of the invention will now be described with reference to Figure 11.

The client software module monitors the real time clock in step 1102, and compares the real time clock reading with a time period in step 1104. The real time clock need not be continuously monitored at step 1102, but may be checked at periodically. The intervals between the checks may be of any suitable period that would avoid inadvertently "jumping" or missing the time period referred to with reference to step 1104.

The time period with which the real time clock reading is compared, is the time period in which automatic accessing to the designated entities is preferably performed. Such a time period may be a period of typically low network traffic volume, and/or network toll charges, as discussed above.

If the result at step 1104 is "no" then process control flow returns to step 1102. However, if the result is "yes" then the first, or topmost, address in stack 300 is accessed at step 1106, and the corresponding entity subsequently downloaded and stored on the client computer system at step 1108. At step 1110 the client software module checks to see if there are any more entries in stack 300 above threshold 308, and if "yes" process control flows to step 1106, where the address of the next entity is accessed.

It may be the case that the server computer system upon which a designated entity is stored is not located in the same time zone, for example country, as the client computer system. Thus, merely accessing entities at time of day suitable for optimised downloading for the client computer system may not be the best approach. It may be better to access such entities at times when the time local to the server is out of office hours.

In a particular embodiment of the invention, a client software module identifies the highest level domain field for each ADDRESS above threshold 308 in stack 300. The high level domain is the last field in a WWW address. For example, in "http:\\www.alcatel.fr" the high level domain is "fr" denoting France, and in "http:\\www.amazon.com" the high level domain is ".com". For many addresses the top level domain indicates the country for which the address has been registered, and very often the location of the server for the corresponding entity. For ".com" domains there is a high probability that the server is located in the USA.

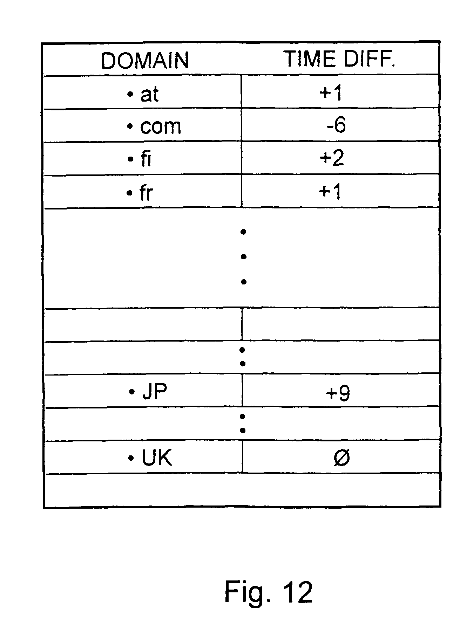

Additionally, the client module includes a table providing a concordance between high level domains and the typical local time for the geographic area corresponding to that high level domain. An example of a suitable table is illustrated in Figure 12, where the time is expressed as an offset from the real time clock of the client computer system. For a high level domain including more than one time zone, e.g. ".com" in USA, a representative offset may be used.

A client software module in accordance with this embodiment would cause a client computer system to operate substantially in accordance with the flow chart illustrated in Figure 11, except for a small modification to step 1104. At step 1104, the high level domains of ADDRESSES in stack 300 above threshold 308 are recorded and compared with the table of Figure 12 to determine if any of them have a local time within the preferred period. For those that do have a local time in the preferred period, automatic caching in accordance with the flow chart illustrated in Figure 10 is initiated. As before, the monitoring of the time may be done at suitable intervals, not necessarily continuously.

In an embodiment in accordance with a second aspect of the invention, a client software module initiates automatic access for each ADDRESS above threshold 308 at a time of day for which access to the entity defined by the ADDRESS is relatively quick. The speed at which an access to an entity is serviced depends not only on network traffic within the computer network comprising the client and server upon which the entity resides, but also depends upon how busy the entity's server is. That is to say, how many access requests that entity's server is having to deal with at the time a user is making their own access. It is very often the case that the volume of access requests a server is having to handle at any one time is the dominant cause of any delay in accessing an entity residing on that server.

In accordance with the second aspect of the invention, the average speed taken to download the computer information, such as data and/or computer-implementable instructions, is measured and compared with a threshold download speed. The threshold download speed corresponds to the minimum speed for requesting and downloading an entity during an access which a user is prepared to accept. Typically, the threshold will be a fraction of a theoretical maximum speed for downloading the computer information corresponding to the requested entity. If an access does not exceed the threshold speed, then the auto-cache access time is set to occur at a different time to the time at which the current access occurred.

The theoretical maximum speed for downloading computer information corresponding to an entity is given by the data rate of the modem utilised by the client computer system. The data rate of the modem is known to the client computer system and typically comprises one of the computer system's operating parameters. The amount of computer information downloaded to the client computer system is typically comprised in the information regarding the entity which is downloaded with the entity itself. For example, a web-page has a description of the amount of data comprising the page and enables the estimation of the percentage of the amount of information comprising that page downloaded at any particular time during an access and the amount of time remaining for that access to be calculated and is typically shown in a full segment of a web browser screen. The download speed for an access to an entity is obtained by the client computer system measuring the time taken for the download and then dividing the amount of computer information downloaded by that time.

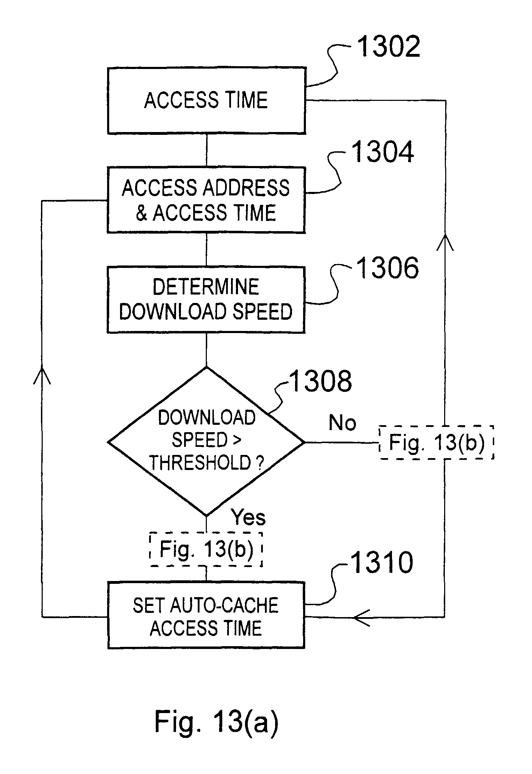

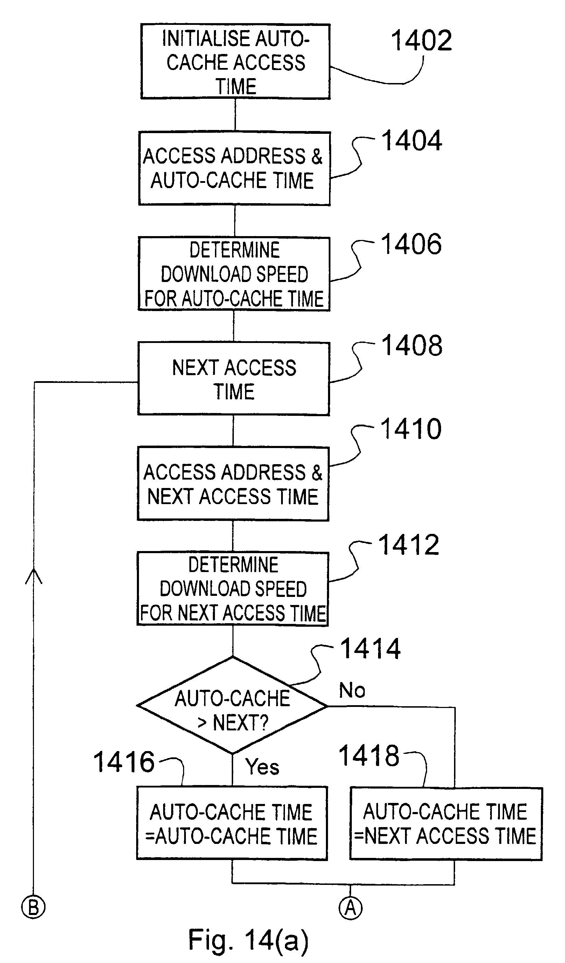

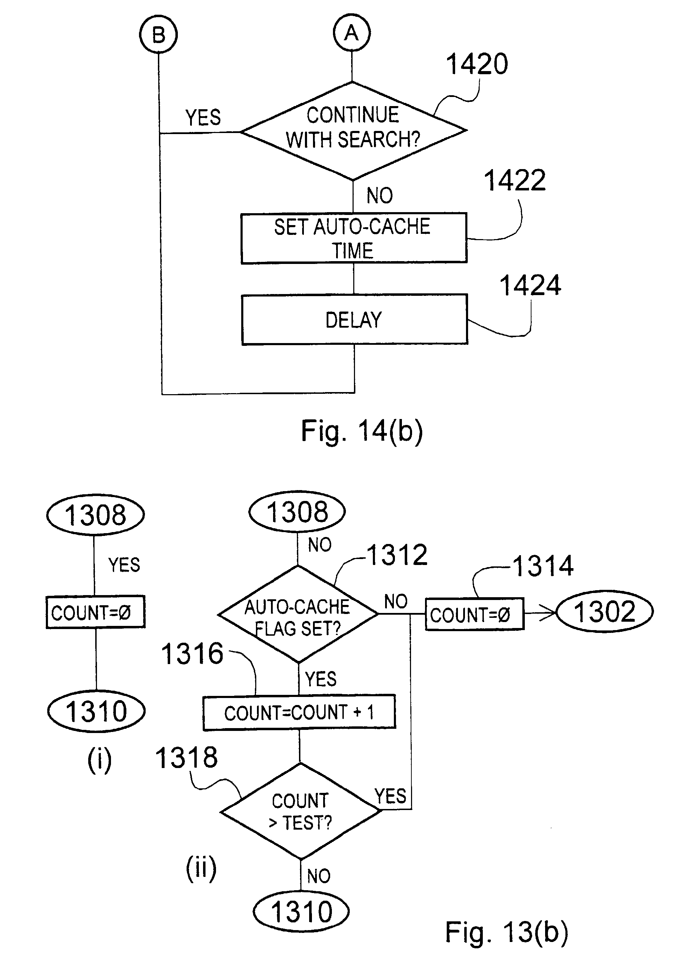

An exemplary embodiment of a client software module in accordance with the second aspect of the invention will now be described, with reference to the flowchart illustrated in Figure 13. The steps shown in broken outline and bearing the legend "Figure 13(b)" refer to steps in an optional embodiment to be described hereinafter.

Initially, at step 1302, an access time for automatically accessing an addressable entity is defined. The access time may be automatically defined by the client software module or may be input by a user. At step 1304, a desired entity is accessed at the access time defined at step 1302. The speed of downloading the computer information corresponding to the requested entity is determined at step 1306 and the result compared with the threshold speed at step 1308.

If the download speed determined at step 1306 is greater than the threshold, step 1308, then operation of the client software module flows to step 1310, missing out the step in broken outline, where the auto-cache access time is set to be the access time determined at step 1302. However, if the result at step 1308 is "no", then the client software module process flows back to step 1302, missing out the step in broken outline", where a new access time is defined. Other than initialisation of the routine illustrated in the flowchart of Figure 13, the access time at 1302 is typically defined automatically, by setting the new access time to be another time different from the previous access time by a predetermined amount. Thus, once the client software module has been initiated, then modification of the access time, in the event that download speed does not exceed the threshold speed, becomes automatic.

Once the auto-cache access time has been set in step 1310, then operation of the client software module flows back to step 1304 where the respective entity is accessed at an access time according to that set in step 1310. Operation of the client software module will continue around steps 1304 to 1306, 1308 and 1310, back to 1304, until such time that the download speed exceeds the threshold speed at step 1308, in which instance operation of the software module flows to step 1302 where a new access time is defined.

Optionally, the software module may be configured to flow to step 1302 and set a new access time only after the download speed for the current access time has failed to exceed the threshold speed at step 1308 a pre-determined number of consecutive times. Such an optional routine is shown in broken outline in Figure 13(a) and labelled "Figure 13(b)". Inclusion of such a routine would also require an auto-cache access flag to be set at step 1310.

Referring now to Figure 13(b) (ii), for this optional embodiment, a "No" result at step 1308 cause program control to flow to step 1312 where it is determined whether or not the auto-cache access flag is set. If the result of step 1312 is "No" then a consecutive failure to exceed threshold speed counter "Count" is assigned a zero value at step 1314. Program control then flows to step 1302. However, if the result of step 1312 is "Yes" the "Count" value is incremented by one at step 1316. At step 1318 it is determined whether or not "Count" exceeds a test value. The test value is whatever number of consecutive failures to exceed the threshold speed is deemed acceptable, and may be user set or pre-set by the client software module. If the value of "Count" does exceed the test value then control flows to step 1314 where "count" is assigned the value zero, and on to step 1302 for setting a new access time. If the result of step 1318 is "No" the program control flows to step 1310. This optional embodiment also requires "Count" to be assigned the value zero for the result of step 1308 being "Yes", as illustrated in Figure 13(b)(i).

The client computer system is configured to operate in accordance with the fore-going described software module for each entity it is desired to automatically address and which, accordingly, occurs above threshold 308 as described above with reference to Figure 4. Suitably, the address associated with each entity is stored in a table having a corresponding entry for the access time, or time period, during which access to the address corresponding to the desired entity should be made and determined by the software module operating in accordance with the flowchart of Figure 13.

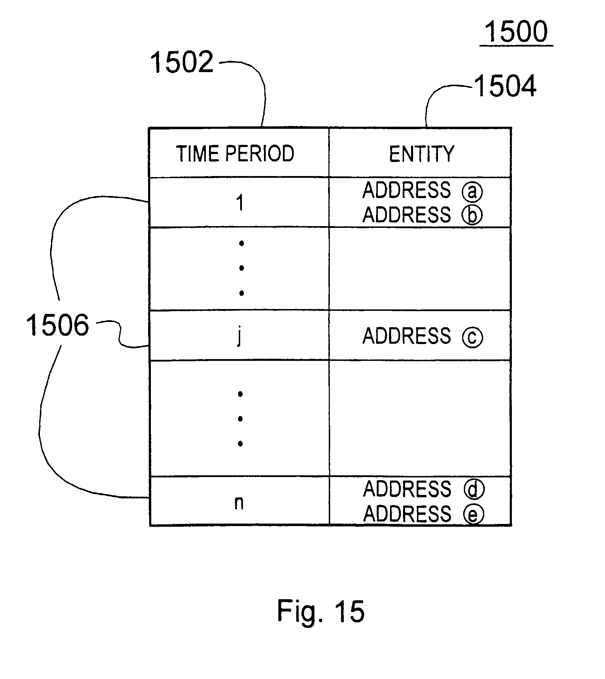

A table suitable for storing such information is illustrated in Figure 15. Such a table would typically be stored in non-volatile memory associated with a computer system and may be updated from time-to-time, in accordance with any changes in auto-cache access times as determined by the software module operating in accordance with the flowchart of Figure 13. The table illustrated in Figure 15 may be combined with the table of Figure 4, or may be created separately. For an individual or separate table, the table 1500 comprises two columns 1502, 1504, respectively comprising a time period and entity address(es) corresponding to accesses during that time period. In the example illustrated with reference to Figure 15, a auto-cache access time has not been defined as a single time point, but as occurring within a time period, 1506, during which access to the respective entity will occur. Thus, it is possible that more than one entity will be accessed during a particular time period. For example, in time period 1, access will be made to ADDRESS (a) and ADDRESS (b). Optionally, column 1502 may comprise individual time points against which access to an ADDRESS of an automatically cached entity is to be initiated. The client software module may be configured to ensure that initiation of access to more than one entity does not occur at a particular time point. Additionally, time points for which initiation to an entity occurs may be separated by sufficient time in order for access to a first entity to be completed, before an access to another entity is initiated.

Optionally, access to more than one entity at a time may occur, for example if the client computer system is capable of receiving parallel or interleaved downloaded computer information corresponding to more than one entity.

By continuously monitoring the download speed for each access of an ADDRESS corresponding to an entity which is automatically cached, the time at which such automatic caching occurs may be automatically changed in order to adapt to the performance of the network and server upon which a respective entity resides. Optionally, such automatic changing can be damped by there having to be more than one consecutive failure to exceed the threshold speed.

An embodiment of a client software module operable in accordance with a third aspect of the invention will now be described with reference to the flowchart illustrated in Figure 14. In such an embodiment, an optimum time for conducting auto-caching is determined and future auto-caching carried out at that time until a predetermined time period has elapsed, when the search for auto-optimum caching time is re-initiated.

Referring now to Figure 14, a auto-cache access time is initialised at step 1402. The address of a desired entity is accessed at the auto-cache time initialised in step 1402, at step 1404. At step 1406, the download speed for downloading the computer information corresponding to the entity accessed at step 1404 is determined. At step 1408, a next access time is defined, which may be automatically defined, or may be defined by a user in a similar fashion to the initialisation of the auto-cache access time in step 1402.

At step 1410, the entity is addressed at a time corresponding to the next access time defined in step 1408. At step 1412, the download speed for downloading the computer information corresponding to the entity accessed at step 1410 is determined.

At step 1414, the download speed corresponding to an access at the auto-cache time is compared with the download speed corresponding to an access at the next access time defined in step 1410. If the auto-cache download speed was less than the next access download speed, then the operation of the client software module flows to step 1416 where the auto-cache time remains the same. If the result of step 1414 is "no", then operation of the client software module flows to step 1418 where the auto-cache time is assigned to be the next access time defined in step 1408.

At step 1420, it is decided whether or not the search for optimum access time should be continued. For example, the criterion for continuing with the search may be based upon the number of consecutive searches which have previously occurred or whether or not the current auto-cache speed is above a suitable threshold value. Such a threshold value may be evaluated substantially in accordance with the evaluation referred to with reference to Figure 13(a).

If the result of step 1420 is "yes", then program control flows to step 1408 where a next access time is defined. Typically, such a next access time will be automatically defined, in order that the search routine becomes automatic at least from initialisation of the search process. However, if it is decided not to continue with the search, then process control flows to step 1422 where the auto-cache time is set to be that determined either at step 1416 or 1418. The auto-cache time set at step 1422 is then the time used for automatic caching of the entity for a delay as defined at step 1424. The delay at step 1424 will be a suitable number of automatic accesses to the entity and, once expired, program control will then flow back to step 1408 where a new access time will be defined. Optionally, program control may flow back to step 1408 in response to a consecutive number of failures to exceed a threshold speed, substantially as described with reference to Figure 13(b).

Thus, a software module operating in accordance with the foregoing-described flowchart does not continuously modify the access time for automatic caching of an entity, but periodically searches for the optimum access time. As will be apparent to a person skilled in the art, a client software module operating in accordance with the second and third aspects of the invention as exemplified by the flowcharts of Figures 13 and 14 respectively would be independently operable for each entity which it is desired to automatically cache. That is to say, for each entity above threshold 308 described above with reference to Figure 4.

In a similar fashion as described with reference to the flowchart of Figure 13, a table of time periods, or time points, with corresponding entries for the ADDRESS(ES) of entities to be accessed during such time periods or at such time points may be stored in non-volatile memory and may be substantially as illustrated in Figure 15.

A particular application for an embodiment of the invention is the client computer system embodied as a portable wireless terminal, for example a wireless Personal Digital Assistant (PDA) or a radio telephone. In such an embodiment the wireless service provider may include a server computer system or systems from which the client wireless terminal automatically caches user specific information, e.g. the download of new services or updates to an address book. Such automatic downloading may be at night, or may even be linked to sensing recharging of the battery pack and not time linked. Thus, there would be a reduction in the airtime usage of subscribers during the day, leading to more available bandwidth for faster download or increased number of subscribers. For a system which sensed recharging, download of data etc. over the air may be performed whilst charging and so the effective or perceived "talk time" and/or "standby time" of the battery would increase. Optionally, data may be downloaded to a wireless terminal such as a wireless PDA via power lines to the battery charger and thence via the charging terminals to the PDA, during recharging.

Optionally, popular system entities may be automatically cached to the wireless service provider's server in accordance with one or more of the foregoing described embodiments, and accessed by interested users. The wireless service provider may also provide a local Base Station server for caching entities relevant to users typically within the area of influence of a particular Base Station, for example financial information for a base Station serving a financial district.

In view of the foregoing description it will be evident to a person skilled in the art that various modifications may be made within the scope of the invention. For example, aspects of the various client software modules and of the foregoing described embodiments may be combined.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

**1.** A method for operating a computer system in a computer network, the method comprising:

automatically accessing an addressable entity within the network during an optimum time period for accessing computer information corresponding to said entity; and
storing said computer information locally to said computer system.

**2.** A method according to Claim 1, further comprising automatically addressing said addressable entity during a predetermined time period.

**3.** A method according to Claim 2, further comprising automatically addressing said addressable entity during a time period generally outside of normal office hours.

**4.** A method according to Claim 3, further comprising automatically accessing said addressable entity between 17:00 and 08:00 on a following day.

**5.** A method according to Claim 4, further comprising automatically accessing said addressable entity between midnight and 06:00.

**6.** A method according to any preceding Claim, wherein said time period is for said computer system local time.

**7.** A method according to Claim 6, further comprising automatically accessing said addressable entity at a time of day corresponding to a local time for which reduced or low rate telecommunications tolls are available.

**8.** A method according to Claim 7, further comprising interrogating a data structure comprising one or more entries including a toll charge and corresponding time period.

**9.** A method according to any one of Claims 1 to 5, wherein said time period is local time for said entity.

**10.** A method according to Claim 9, further comprising determining a top level domain for said addressable entity; and

deriving local time for said entity from a knowledge of said top level domain.

**11.** A method according to Claim 10, further comprising comparing said top level domain with a data structure comprising at least one entry having a top level domain designation and an associated local time for said top level domain.

**12.** A method according to Claim 11, wherein said data structure comprises a table including respective entries comprising a top level domain designation and an associated local time.

**13.** A method according to Claim 2, further comprising determining access speed for said addressable entity during a time period and establishing said time period as said predetermined time period for said access speed exceeding a threshold value.

**14.** A method according to Claim 13, further comprising determining access speed for said addressable entity during another time period for said access speed for said time period failing to exceed said threshold value.

**15.** A method according to Claim 14, comprising determining access speed for said addressable entity during said another time period in response to said access speed for said predetermined time period failing to exceed said threshold for a predetermined number of consecutive accesses to said addressable entity.

**16.** A method according to any one of Claims 13 to 15, said time period and predetermined time period being measured in local time for said computer system.

**17.** A method according to Claim 2, the method comprising the steps:

(a) accessing an addressable entity within said network during a first time period;
(b) determining speed for accessing said addressable entity during said first time period;
(c) accessing said addressable entity during a next time period;
(d) determining speed for accessing said addressable entity during said next time period;
(e) comparing respective access speeds for accessing said addressable entity during first and next time periods to determine the time period corresponding to greatest access speed; and
(f) setting said predetermined time period to said time period corresponding to greatest access speed.

**18.** A method according to Claim 17, comprising in step (a) initialising said predetermined time period as said first time period.

**19.** A method according to Claim 17 or Claim 18, comprising repeating said steps (c) to (f)_ responsive to a first criterion being satisfied.

**20.** A method according to Claim 19, wherein said first criterion comprises a number of consecutive iterations of steps (c)-(f).

**21.** A method according to Claim 19, wherein said first criterion comprises said access speed being below a threshold value.

**22.** A method according to any one of Claims 17 to 21, further comprising initiating steps (a) to (f) responsive to a second criterion being satisfied.

**23.** A method according to Claim 22, said second criterion comprising a predetermined time interval having elapsed since a previous initiation of steps (a) to (f).

**24.** A method according to Claim 22 or 23, said second criterion comprising said access speed for said accessing during said predetermined time period failing to exceed a threshold value.

**25.** A method according to any one of Claims 17 to 24, said time periods being measured in local time for said computer system.

**26.** A method for operating a portable wireless computer system in a computer network including a rechargeable battery pack, the method comprising:

automatically accessing an addressable entity within said network during charging of said battery pack for said computer system for downloading computer information corresponding to said entity; and
storing said computer information locally to said computer system.

**27.** A method according to Claim 26, wherein said portable wireless computer system includes a radio telephone or Personal Digital Assistant.

**28.** A method for operating a wireless communications system comprising a base station having an area of wireless communications influence, the method comprising:

accessing an addressable entity within a computer network;
storing computer information corresponding to said addressable entity locally to said base station; and
providing access to said computer information to wireless communications terminals within said area of influence.

**29.** A method according to Claim 28, said accessing of said addressable entity in accordance with any one of Claims 1 to 27.

**30.** A method according to any preceding Claim, wherein said access speed comprises download speed for said computer information.

**31.** A computer program comprising machine implementable instructions for performing a method according to any preceding Claim.

**32.** A carrier medium comprising a computer program according to Claim 31.

**33.** A carrier medium according to Claim 32, comprising memory means including a magnetic disk memory, an optical disk memory or a semiconductor memory.

**34.** An article of manufacture comprising a carrier medium according to Claim 32 or 33.

**35.** A carrier medium according to Claim 32, comprising a radio frequency carrier wave or optical carrier wave.

**36.** Apparatus operable to communicate with at least one of a plurality of addressable entities within a computer network, comprising:

communication means for communicating with said at least one of said plurality of addressable entities;
means for automatically accessing said at least one addressable entity during an optimum time period for accessing computer information corresponding to said entity; and
means for automatically storing said computer information locally to said computer system.

**37.** Apparatus according to Claim 36, further comprising means for automatically addressing said addressable entity during a predetermined time period.

**38.** Apparatus according to Claim 37, further comprising means for automatically addressing said addressable entity during a time period generally outside of normal office hours.

**39.** Apparatus according to Claim 38, further comprising means for automatically accessing said addressable entity between 17:00 and 08:00 on a following day.

**40.** Apparatus according to Claim 39, further comprising means for automatically accessing said addressable entity between midnight and 06:00.

**41.** Apparatus according to one of Claims 36 to 40, wherein said time period is for said computer system local time.

**42.** Apparatus according to Claim 41, further comprising means for automatically accessing said addressable entity at a time of day corresponding to a local time for which reduced or low rate telecommunications tolls are available.

**43.** Apparatus according to Claim 42, further comprising a computer implemented data structure comprising one or more entries including a toll charge and corresponding time period.

**44.** Apparatus according to any one of Claims 36 to 41, wherein said time period is local time for said entity.

**45.** Apparatus method according to Claim 44, further comprising means for determining a top level domain for said addressable entity; and

means for deriving local time for said entity from a knowledge of said top level domain.

**46.** Apparatus according to Claim 45, further comprising means for comparing said top level domain with a data structure comprising at least one entry having a top level domain designation and an associated local time for said top level domain.

**47.** Apparatus according to Claim 46, wherein said data structure comprises a table including respective entries comprising a top level domain designation and an associated local time.

**48.** Apparatus according to Claim 36, further comprising means for determining access speed for said addressable entity during a time period and establishing said time period as said predetermined time period for said access speed exceeding a threshold value.

**49.** Apparatus according to Claim 48, further comprising means for determining access speed for said addressable entity during another time period for said access speed corresponding to said time period failing to exceed said threshold value.

**50.** Apparatus according to Claim 36, further comprising means operable to perform the following steps:

(a) accessing an addressable entity within said network during a first time period;
(b) determining speed for accessing said addressable entity during said first time period;
(c) accessing said addressable entity during a next time period;
(d) determining speed for accessing said addressable entity during said next time period;
(e) comparing respective access speeds for accessing said addressable entity during first and next time periods to determine the time period corresponding to greatest access speed; and
(f) setting said predetermined time period to said time period corresponding to greatest access speed.

**51.** A portable wireless terminal operable in a computer network, comprising:

computing means;
user interface means including a key pad and a display;
a rechargeable battery pack;
sensing means for sensing charging of said battery pack; and
means for automatically accessing an addressable entity within said network for accessing computer information responsive to said entity sensing charging of said battery pack; and
means for automatically storing said computer information locally to said wireless terminal.

**52.** A portable wireless computer system according to Claim 51, wherein said portable wireless computer system includes a radio telephone or Personal Digital Assistant.

**53.** A wireless communications system, comprising:

a base station defining an area of communications influence for wireless terminals; and
a computer system associated with said base station and operable to cache computer information corresponding to an addressable entity within a computer network;
said base station and said computer system operable to provide access to said computer information cached on said computer system to wireless terminals within said area of wireless communications influence.

Internet
2
10
11
12
14
15
16
17
18
19
20
21
22
24
26

Fig. 1

20
18
32
34
36
30
ROM
RAM
DISPLAY ADAPTER
CPU
38
40
41
42
44
INPUT DEVICE ADAPTER
PRINTER ADAPTER
MEDIA DRIVE ADAPTER
TELECOM ADAPTER
22
26
OPTICAL DRIVE
24
14
FLOPPY DRIVE
HARD DISK DRIVE
21
10/11
15
16
19
17

Fig. 2

304
306
300
ADDRESS A
24
ADDRESS D
21
ADDRESS B
20
302
310
302
ADDRESS F
10
Threshold
ADDRESS C
8
ADDRESS E
7
308
312
302

Fig. 3

304
306
300
ADDRESS A
24
ADDRESS B
22
ADDRESS D
21
302
310
302
ADDRESS C
11
ADDRESS E
10
ADDRESS F
9
308
312
302

Fig. 4

ADDRESS
N= n x flag
504
506
502

Fig. 5

ADDRESS
N
n
flag
604
606
610
608
602

Fig. 6

ADDRESS
Profile Counter Evaluation
Cache Freq...(F)
904
906
908
902

Fig. 9

702
START
704
SITE ADDRESSED ?
N
Y
706
COMPARE ADDRESS WITH STACK
708
IN STACK?
N
Y
710
714
UPDATE ACCESS PROFILE VALUE
CREATE STACK ENTRY
712
716
ORDER ADDRESS
INITIALISE ACCESS PROFILE VALUE
718
END

Fig. 7

802
BEGIN AUTO-CACHE
804
MORE ENTRIES ?
N
Y
806
SELECT NEXT ENTRY
808
CRITERION MET?
N
810
ACCESS ADDRESS
END
812
STORE CONTENTS
814

Fig. 8

1002
START
1004
READ PAGE INFO/LAST MODIFIED DATE
1006
STORE DATE
1008
DETERMINE UPDATE PERIODICITY
1010
SET AUTO-CACHE INTERVAL DATE (F)
1012
END

Fig. 10

1102
CHECK RTC
1104
RIGHT TIME PERIOD?
N
1106
Y
ACCESS ADDRESS
1108
STORE ENTITY
1110
MORE ENTRIES?
Y
1112
SELECT NEXT ADDRESS
N

Fig. 11

| DOMAIN | TIME DIFF. |
|---|---|
| • at | +1 |
| • com | -6 |
| • fi | +2 |
| • fr | +1 |
| • | |
| • | |
| • | |
| | |
| : | |
| • JP | +9 |
| : | |
| • UK | Ø |
| | |

Fig. 12

1302
ACCESS TIME
1304
ACCESS ADDRESS
& ACCESS TIME
1306
DETERMINE
DOWNLOAD SPEED
1308
DOWNLOAD
SPEED >
THRESHOLD ?
No
Fig. 13(b)
Yes
Fig. 13(b)
1310
SET AUTO-CACHE
ACCESS TIME

Fig. 13(a)

INITIALISE AUTO-CACHE ACCESS TIME
1402
ACCESS ADDRESS & AUTO-CACHE TIME
1404
DETERMINE DOWNLOAD SPEED FOR AUTO-CACHE TIME
1406
NEXT ACCESS TIME
1408
ACCESS ADDRESS & NEXT ACCESS TIME
1410
DETERMINE DOWNLOAD SPEED FOR NEXT ACCESS TIME
1412
AUTO-CACHE > NEXT?
1414
No
Yes
1416
AUTO-CACHE TIME =AUTO-CACHE TIME
1418
AUTO-CACHE TIME =NEXT ACCESS TIME
B
A

Fig. 14(a)

B
A
1420
YES
CONTINUE WITH SEARCH?
NO
1422
SET AUTO-CACHE TIME
1424
DELAY

Fig. 14(b)

1308
YES
COUNT=Ø
1310
(i)
1308
NO
1312
AUTO-CACHE FLAG SET?
NO
1314
COUNT=Ø
1302
1316
YES
COUNT=COUNT + 1
1318
COUNT > TEST?
YES
(ii)
NO
1310

Fig. 13(b)

1500
1502
1504
1506
TIME PERIOD
ENTITY
1
ADDRESS ⓐ
ADDRESS ⓑ
j
ADDRESS ⓒ
n
ADDRESS ⓓ
ADDRESS ⓔ

Fig. 15